Europäisches Patentamt

European Patent Office

Office européen des brevets

(11) Publication number: **0 013 307**
**B1**

# (12) EUROPEAN PATENT SPECIFICATION

(45) Date of publication of patent specification: 05.09.84

(51) Int. Cl.³: **C 05 G 1/00, C 05 C 9/02**

(21) Application number: 79104296.3

(22) Date of filing: 03.11.79

(54) **Liquid foliar fertilizer compositions containing water-soluble urea-formaldehyde products.**

(30) Priority: 16.11.78 US 961336

(43) Date of publication of application:
23.07.80 Bulletin 80/15

(45) Publication of the grant of the patent:
05.09.84 Bulletin 84/36

(84) Designated Contracting States:
DE FR GB IT

(56) References cited:
FR-A-2 332 965
GB-A- 976 713
US-A-2 827 368
US-A-3 092 486
US-A-3 227 543
US-A-3 640 698
US-A-3 677 736
US-A-3 918 952
US-A-3 970 625
US-A-4 025 329
US-A-4 146 383

(73) Proprietor: **ALLIED CORPORATION**
**Columbia Road and Park Avenue P.O. Box 2245R**
**(Law Dept.)**
**Morristown New Jersey 07960 (US)**

(72) Inventor: **Sansing, James E.**
**1529 Kenilworth Parkway**
**Baton Rouge, Louisiana 70808 (US)**
Inventor: **Williamson, Harold D.**
**9539 Wild Valley Road**
**Baton Rouge, Louisiana 70810 (US)**

(74) Representative: **Collier, Jeremy Austin Grey**
**et al**
**J.A.Kemp & Co. 14, South Square Gray's Inn**
**London WC1R 5EU (GB)**

Courier Press, Leamington Spa, England.

## Description

This invention relates to the discovery that certain water-soluble reaction products of urea and formaldehyde exhibit exceptional properties in the foliar feeding of growing plants. More particularly, this invention is concerned with aqueous solutions of phosphate and potassium containing materials together with a water-soluble urea formaldehyde reaction product composition consisting essentially of unreacted urea and methylol- and methyleneurea compounds which is essentially free of unreacted formaldehyde, is non-burning, and is absorbed by plant foliage at rates more nearly equivalent to other macronutrients such as phosphorus, potassium and sulfur, than currently used nitrogen containing compositions.

The foliar feeding of plant nutrients involves the dissolution of the nutrients in water and spraying of the aqueous solution of nutrients onto the leaves of plants. Unsuccessful results from foliar fertilization in increasing yield and obtainment of better quality of crop has been reported in the past by Medersi, H. J. and Volk, G. W., *Foliar Fertilization of Field Crops*, Ohio Agricultural Experimental Station Research Circular 35 (August, 1956). It has been generally assumed that legume and cereal grain crops which have been adequately fertilized by ground fertilization will not produce significantly higher yields of the grain by supplemental foliar fertilization. The obtainment of mixed results employing foliar fertilization of crops is generally due to varying environmental factors, soil fertilities, inability to apply more than small quantities of foliar fertilizers without damaging plant tissue and absorption of the various plant's nutrients contained in the fertilizer by the plant at different rates. The January, 1969 issue of *World Farming* contains a more complete dissertation of the benefits of nitrogen-phosphorus-potassium (N-P-K) foliar fertilization and the limits of application levels beyond which leaf scorch occurs.

Various references to foliar fertilization appear in the literature. Semon United States Patent 2,663,629 is concerned with the supplemental nitrogen feeding of plants through leaves by applying an essential nitrogen-supplying nutrient such as urea with a diamide of an organic dicarboxylic acid as dispersing agent. Belasco et al. United States Patent 2,802,307 is concerned with a method for increasing the nutritive value of plants by application of aqueous solutions of urea and other nitrogeneous compounds to the foliage, thereby increasing the production of various crops. Martin United States Patent 3,087,806 describes a method for improving the yield of soybeans by spraying the plants periodically throughout their growth with an aqueous solution of urea phosphate. Wagner United States Patent 3,558,300, assigned to the same assignee as is the present application, describes a method for foliar feeding of field crops, including soybeans and cereal grains, with an aqueous solution of an ammonium polyphosphate to improve the stress resistance of the plants; adequate ground fertilization is employed in conjunction with the foliar feeding. Backlund United States Patent 3,640,698 describes a fertilizer urea solution containing micronutrients for treatment of plants and soil to correct micronutrient deficiencies.

Clapp et al. United States Patent 4,038,064, also assigned to same assignee as in the present application, describes the most recent advance in the foliar fertilization of field crops; the present invention constitutes an improvement in the compositions and methods described therein. Although the foliar fertilizer compositions described in United States Patent 4,038,064 result in improved yields, such compositions have at times been found to be deficient in providing an adequate supply of nitrogen during the maturation of the crop which occurs over relatively extended periods, for example, about five to ten weeks, since currently available water-soluble nitrogen sources such as urea or ammonium salts are absorbed by the plant within several days, i.e. less than one week following application, while water-insoluble products, in solid or suspension form, normally require a period of three months or longer to be absorbed, with as much as 40% of the nitrogen contained in such product remaining unabsorbed at the time of harvest.

Urea-formaldehyde compositions have also been known for many years to have been used as non-burning, slow release fertilizers in solid or suspension form, especially for ground fertilization. Background information concerning the use of such area-formaldehyde compositions, known in the literature as "ureaform" may be found in Windsor, G. W. and Long, M. I. E., J. SCI. Food Agriculture 9:185—194 (April 1958). In addition, the use of stable urea-formaldehyde suspensions and solids as fertilizers has been an active topic in the patent literature. Hence, British Patent 976,713 discloses the production of stable suspensions of urea and formaldehyde which are suited for incorporation in an acidic fertilizer substrate to prepare mixed fertilizers. Mortenson et al. United States Patent 2,827,368 is concerned with certain chemical fertilizers which provide liberal quantities of nitrogen, potassium and phosphorus and which have little or no "burn" or plasmolysis effect on leafy plants, based on the vapor pressure of a water solution of the fertilizer ingredients. Waters et al. United States Patent 3,092,486 assigned to the same assignee as is the present application, is concerned with an ammoniating solution containing urea and formaldehyde suitable for use in the manufacture of mixed fertilizers containing water-insoluble nitrogen. O'Donnell United States Patent 3,227,543 is concerned with the production of stable, liquid urea-formaldehyde condensates and use thereof in the production of solid urea-formaldehyde fertilizer compositions containing chelating agents and/or trace elements, uniformly distributed and suspended therein in slowly releasable form. Formaini United States Patent 3,677,736, also assigned to the same assignee as is the present application, is concerned with liquid fertilizer suspensions containing ureaform having certain water insoluble nitrogen content and activity index. Kise United States Patent 2,652,377 and Moore et al. United States Patent, 3,970,625, each being also assigned to the same assignee as is the present application, are concerned with the production of a stable, aqueous solution of urea-formaldehyde reaction products and with a process for preparing an improved urea-formaldehyde concentrate particularly adapted to production of slow-release nitrogeneous fertilizers, respectively. Justice et al. United States Patent, 3,462,256, assigned to the same assignee as is the present application, is concerned with the preparation of urea-formaldehyde aqueous concentrates employable as a constituent in the compositions of the present invention. Hence, the prior art has failed to recognize that certain water-soluble urea-formaldehyde reaction products are particularly useful as foliar fertilizers, and especially, the compatibility of certain such area-formaldehyde reaction products with other primary plant nutrients to provide a highly efficient, nonphytotoxic, slow-release foliar fertilizer composition.

In accordance with the present invention, it has been discovered that certain water-soluble reaction products of urea and formaldehyde are particularly useful for foliar feeding of growing plants, and further, are absorbed by plant foliage at rates more nearly equivalent to other primary plant nutrients, such as the phosphorus and potassium components of the fertilizer, than currently used conventional water-soluble nitrogen-containing fertilizers, such as urea in liquid form or ammonium salts, illustratively ammonium sulfate, as well as nitrogen-containing water-insoluble products in solid or suspension form.

In accordance with the present invention there is provided a nonphytotoxic aqueous composition for use as a foliar fertilizer to provide essentially uniform absorption of nitrogen, phosphorus and potassium and, if present, sulfur macronutrient components thereof by the plant growth to which it is applied, comprising an aqueous solution containing urea, a polyphosphate, potassium and optionally sulfur as primary nutrient constituents, characterised by containing, on a weight basis

a) 3% to 35% nitrogen, present in the form of a water-soluble urea-formaldehyde reaction product in which the nitrogen is provided 5 to 50% by unreacted area, 5 to 25% by methylolurea compounds and 30 to 80% by methyleneurea compounds, which is substantially free of unreacted formaldehyde and which has an ammoniacal nitrogen content of not more than 5%;

b) 3% to 30% phosphorus (calculated as $P_2O_5$) having at least 35% of the phosphorus present in the polyphosphate form;

c) 3% to 30% of potassium (calculated as $K_2O$); and

d) from 0 to 5% sulfur in the form of a water-soluble salt.

The water-soluble urea-formaldehyde reaction product employed in the composition of the present invention provides reduced alkalinity and buffering of the composite fertilizer ingredients. In addition to being of a non-burning character, thereby avoiding phytotoxicity and metabolic imbalance in plants, the foliar fertilizer composition of the present invention provides for healthy plants with increased yields. Furthermore, highly efficient use of nutrient solutions by the plants is achieved by use of the composition of the present invention since the nitrogen of the urea-formaldehyde reaction product is totally absorbed by plants within the period correspondingly essentially to the period of absorption required by plants for the phosphorus and potassium, as well as sulfur containing foliar macronutrient components of the fertilizer compositions containing these nutrients.

The urea-formaldehyde reaction product, used as the nitrogen constituent of the compositions of the present invention, may be obtained by various procedures. The preferred method for production of the urea-formaldehyde reaction product is described in U.S. Patent 3,462,256. In accordance with this patent, the urea-formaldehyde reaction products are in the form of aqueous concentrate solutions containing 80% to 90%, by weight of a product obtained by reacting urea and formaldehyde in a mol ratio above 1:1 and less than 2:1 which will remain substantially clear for at least 30 days at ambient temperatures and will not "salt out" i.e. precipitate solid material at temperatures as low as 0°C. for at least 7 days. These urea-formaldehyde reaction products are prepared by a process which comprises preparing an aqueous mixture of urea and formaldehyde having a urea: formaldehyde mol ratio above 1:1 but less than 2:1, adding ammonia in an amount of 0.3% to 6%, by weight of the urea and formaldehyde, heating said mixture at a temperature between 75°C and boiling while maintaining the pH of the mixture at 8.5 to 10, preferably 9.0 to 9.8, with strong alkali until at least 90% of formaldehyde is in combined form, with at least 60% of the formaldehyde in the form of methylol compounds, and then continuing said heating at a pH of 7 to 8.5, preferably 7.3 to 7.9 until at least 50%, but no more than 80%, preferably 60% to 70%, of the formaldehyde is in the form of methylene groups. This reaction product is characterized by being substantially free of unreacted formaldehyde and contains unreacted urea in an amount generally between 30% and 80% of that employed, methylolurea compounds such as monomethylolurea and dimethylolurea, in an amount of 10 to 30% of the urea used, and methylene-urea compounds, such as methylenediurea and dimethylenetriurea in an amount between 20% and 50% of the urea used, and is further characterized by having an ammoniacal nitrogen content of not more than 5%, preferably not greater than 3%.

The aqueous mixture of urea, formaldehyde and ammonia can be prepared from the individual components, i.e. a commercially available formaldehyde solution and urea in any convenient form.

However, such compositions can also be prepared by adding urea, in liquid or solid form, to an already partially condensed urea-formaldehyde reaction product, such as UF Concentrate 85, prepared in accordance with U.S. Patent 2,652,377, and the term "aqueous mixture" mentioned hereinabove is meant to include mixtures prepared in this manner.

The amount of ammonia necessary varies within the range of 0.3 to 6%, by weight of the total urea-formaldehyde. From 0.7 to 3%, by weight, is employed when the urea: formaldehyde mol ratio is 1.3:1 to 1.8:1 in accordance with preferred embodiment. The ammonia may be employed in liquid or gaseous form, either anhydrous or in aqueous solution. It is to be noted that the ammonia not used merely to provide a desired pH, since this is the function of the strong alkali. The ammonia by itself would not maintain the pH at the desired level but rather, the presence of ammonia during the heating step results in a product having superior stability as compared with a product similarly prepared, but without added ammonia. Best results are obtained when at least 50% of the ammonia, and preferably essentially all of the ammonia, is added before or during the first heating stage; otherwise, the order in which the components are added is of little consequence. Usually, the urea and formaldehyde are mixed in water and then ammonia is added. Sufficient water should be used to dissolve all of the components during the heating step. However, the use of more than 50% by weight of water is undesirable as it necessitates a prolonged evaporation step. Heating is preferably commenced within a few minutes after preparation of the mixture to ensure that the resulting product is uniformly stable.

The mixture is heated at a temperature between 75°C. and its boiling point, preferably between 85°C. to 95°C.; substantially atmospheric pressure for a total time of 30 to 180, preferably 75 to 115 minutes. The amount of time, of course, decreases as the heating temperature increases.

The first heating stage is carried out until at least 90% of the formaldehyde is in combined form (or, conversely, no more than 10% of free formaldehyde is present) with at least 60% of formaldehyde in the form of methylol compounds. During the second stage any free formaldehyde reacts to give a product substantially free of unreacted formaldehyde. The percentage of combined formaldehyde can be determined by the sodium sulfite method described in *Formaldehyde*, Walker, second edition, page 382. By effecting this test at 0°C., the amount of free formaldehyde can be determined. By effecting the same test at 80°C., combined amount of free and methylol formaldehyde can be determined. From the result of these tests, the percentages of methyl-olformaldehyde and methyleneformaldehyde can be determined. For the purpose of the present invention, all formaldehyde which is neither free nor in methylol form is considered to be in methylene form. The end point in the second heating stage can also be determined using the 80°C. sodium sulfite method, or an 80°C. alkaline peroxide method, described in Walker on page 384.

Another method for determining the end point of the heating is an acetone titration test. A 10 milliliters sample of the mixture is concentrated at reduced pressure to a urea-formaldehyde content of 80% to 90%, preferably about 85%, and is mixed with 20 milliliters of methanol. The resulting mixture is then titrated at room temperature with acetone until it becomes turbid. If more than the predetermined amount of acetone is required, the salting out temperature of the mixture is above 0°C. The amount of acetone required to cause turbidity will vary slightly depending, for example, on the amount of water in a mixture. Products prepared in accordance with the preferred conditions require 30 to 34 milliliters of acetone.

Any strong alkaline material may be used to control the pH during the aforedescribed heating step. In the preferred method, an alkali metal hydroxide is gradually added to the reaction mixture at a rate sufficient to maintain the pH in a range of 8.5 to 10 until the desired percentage of combined formaldehyde is achieved. Thereafter, the addition of hydroxide is discontinued and the pH drops rather quickly to below about 8.5 and remains below that level during the remainder of the heating. Usually the addition of the alkaline material is discontinued 50% to 80% through the total heating period.

When the heating is completed, the water content of the reaction mixture may vary between 15% and 45% by weight; depending upon the starting materials employed. If the amount of water is greater than 20% by weight, the mixture should be concentrated under subatmospheric pressure at 35°C. to 90°C. until a clear solution containing at least 80% urea and formaldehyde is obtained. If there is a hold between the heating step and evaporation step, the mixture is advantageously cooled below 45°C. before holding. The final product should also be quickly cooled before storage. The pH of the final cooled product should be in the range of 7 to 11, preferable 9 to 10. If necessary, the product can be adjusted to this pH by addition of sufficiently strong alkaline material. It is also desirable to add a small amount, 0.05% to 1.0% by weight, of ammonia to this product to further increase stability.

The nitrogen constituent of the compositions of the invention is present in an amount between 3% to 35%, preferably between 18% and 32% and is, in general, supplied totally by the water-soluble urea-formaldehyde reaction product comprising unreacted urea in an amount between 5% and 50%, preferably between 8% and 35%, methylolurea compounds, such as monomethylolurea and dimethylolurea, in an amount between 5% and 25%, preferably between 10% and 20%, and methyleneurea compounds, such as methylenediurea and dimethylenetriurea, in an amount between 30% and 80%, preferably between 40% and 70% of the total quantity of nitrogen present in the composition. Other water soluble urea-formaldehyde reaction products may also be present in minor amounts, i.e. less than 10% of the weight of the urea-formaldehyde product. If desired, a portion of the

O 013 307

nitrogen can also be supplied by water soluble ammonium salts, such as ammonium polyphosphate produced by reaction of superphosphoric acid with ammonia, or by ammonium sulfate.

The phosphorus macronutrient constituent of the compositions of the present invention is present in an amount between 3% and 30%, preferably between 4% and 12% (calculated as $P_2O_5$) and is characterized by having at least 35%, and preferably at least 50%, of the phosphorus present in the linear "polyphosphate" form. The polyphosphate nutrient component includes the pyrophosphate, and other polymer phosphates from the tri- to the nona-phosphates and higher linear polyphosphates. Use of concentrations of the polyphosphate lower than those specified herein result in solutions which have unacceptable higher salting out temperatures and less micronutrient chelating ability. Higher concentrations of the "polyphosphate" form result in formation of metaphosphates which have lower solubilities than the linear form and are ineffectual in preventing formation of precipitates. If desired, the phosphorus constituent may be added in combined form, such as an ammonium phosphate or ammonium polyphosphate, as well as potassium polyphosphate. While the phosphorus and potassium components can be produced and added separately, they are preferably produced as potassium polyphosphate solutions in a single manufacturing operation, for example, as disclosed in U.S. Patent 3,607,018 however, the potassium polyphosphate product must be dissolved in a solvent other than an aqueous ammonia solution, such as water, to ensure that the final liquid composition of the present invention contains not more than 5% nitrogen in the ammoniacal form.

The potassium and, if employed, sulfur macronutrient constituents to be employed in the compositions of the invention may also be in the form of salts containing potassium or sulfur. For example, potassium carbonate or bicarbonate, etc. may be used and a single salt may be used to prove both potassium and sulfur such as potassium sulfate, or as indicated above, the salt may provide potassium and phosphorus, such as potassium polyphosphate, etc. The sulfur will commonly be present as the sulfate, associated with ammonium, potassium, calcium or a similar cation. The potassium component of the solution should be essentially free of chloride ion which may have a burning or scorching effect on the plants when applied to the foliage. Accordingly, the total chloride ion content of the composition is normally maintained below 5%, and preferably less than 2%.

The nonphytotoxic liquid fertilizer compositions of the invention, when employed as a foliar fertilizer, normally are employed at a pH preferably near neutral, e.g. from 5.5 to 8.5, and particularly from 6.0 to 7.2 to maintain the rate of hydrolysis at a minimum. Liquid compositions of pH values from 4 to 11 may be used, however, depending upon the nutrient requirements of the urea to be fertilized. Thus, areas deficient chiefly in phosphate could be fertilized with a more strongly acidic phosphate solution, for example, a potassium or ammonium polyphosphate with a pH from 4 to 6 and containing some free-phosphoric acid.

The aforementioned liquid compositions of the invention are applied to crops, turf, horticulture or silviculture by aerial application with a total volume of aqueous spray applied being from 22 to 670 L/ha (2 to 60 U.S. gallons per acre), preferably from 112 to 450 L/ha (10 to 40 U.S. gallons per acre). The actual volume employed may be varied somewhat, depending upon the substrate to which the solution is to be applied, season, difficulty of the application, as well as the density and moisture content of the foliage. The liquid compositions are normally applied directly to foliage when the foliage is not in a turgid growing state and when atmospheric conditions are mild, i.e. moderate temperature and humidity. In general, these compositions are diluted with water to reduce burning and permit more uniform application with larger volumes of materials and the volume selected will be sufficient to achieve complete distribution of the fertilizer of the foliage without effecting any substantial drainage of the foliage to the surface soil. The concentration of the fertilizer in the aforementioned aqueous spray will normally be at least 2 weight percent nutrient, and should be sufficient to achieve the application of from 4.5 to 90 kg/ha (4 to 80 pounds per acre), preferably 11 to 67 kg/ha (10 to 60 pounds per acre) N-P-K-S nutrients in the case of field crops; from 45 to 225 kg/ha (40 to 200 pounds per acre), preferably from 90 to 180 kg/ha (80 to 160 pounds per acre) N-P-K-S nutrients in the case of turf; and from 22 to 180 kg/ha (20 to 160 pounds per acre) N-P-K-S nutrients in the case of horticultural and silviculture. For example, a mixture with less burning potential which can be directly applied to turf under all conditions can be made from urea-formaldehyde reaction product and potassium polyphosphate; hence a 20—4—4 liquid composition grade is made by mixing about 567 kg (1252 lbs) of a urea-formaldehyde reaction product, about 202 kg (445 lbs) of potassium polyphosphate (2—18—18) and about 137 kg (303 lbs) of water. Mixtures useful in foliar feeding of commercial field crops such as corn, soybeans, cotton or wheat are made from urea-formaldehyde reaction product, potassium polyphosphate and small amounts of other common fertilizer materials. A mixture useful in foliar feeding grain crop such as corn, sorghum and what is a N-P-K grade 15—5—5 made by blending 172 kg (932 lbs) of urea-formaldehyde reaction product, 103 kg (556 lbs) of potassium polyphosphate and 94 kg (512 lbs) of water per 1000 kg (per ton) of product. Similarly a mixture useful for foliar feeding soybeans and other legumes is a N-P-K grade 12—7—9 made by blending 133 kg (724 lbs) of urea-formaldehyde reaction product, 143 kg (778 lbs) of potassium polyphosphate, 14 kg (78 lbs) of potassium sulfate and 77 kg (420 lbs) of water per 1000 kg (per ton) of product. A mixture useful for foliar feeding cotton is a N-P-K grade 10—8—9 made by blending 109 kg (590 lbs) of urea-formaldehyde reaction product, 164 kg (889 lbs) of potassium polyphosphate, 7 kg (39 lbs) of potassium sulfate and 89 kg (482 lbs) of water per 1000 kg (per ton) of product. All these mixtures are applied without dilution directly to plant foilage as fine mists. The liquid fertilizer compositions of the invention are preferably only applied annually; however, more frequent applications such as semi-annual or quarterly applications can be used, or alternatively, the applications can be less frequent, for example, biannually. Preferably, the fertilizer solution is applied during the active growing season of the crops, turf, silviculture or horticulture. Application of the compositions of the present invention is made using conventional applicators well known in the industry and is made in conjunction with conventional, adequate ground application of fertilizer containing nitrogen, phosphorous, potassium and other essential nutrients if the soil is deficient in any of these nutrients.

The plant foliage treated with the liquid compositions of the invention respond rapidly to the fertilization as evidenced by increased green coloration of the foliage within a few days to weeks after fertilization. This increased greening is generally persistent, lasting for several months or throughout the growing season and results in substantially greater rate of crop yield, or growth of turf, silviculture or horticulture. The nonburning character of the liquid compositions of the invention is evidenced by the fact that as much as 112 kg/ha (100 pounds per acre) of nitrogen can be applied without harmful effects, while the maximum of 56 kg/ha (50 pounds per acre) of nitrogen can be applied using urea solutions which are conventionally applied. A further advantage of the compositions of this invention is that the unreacted urea portion of the liquid composition is absorbed by the foliage within about a week following application, while that portion of urea which is in chemical combination with formaldehyde in the form of methylolurea and methyleneurea compounds is absorbed more slowly, requiring up to 7 to 8 weeks for complete absorption.

Minor and trace metal nutrients may also be incorporated in the aforementioned liquid foliar fertilizer compositions of the invention in minor amounts, for example from 0.01 to 5, preferably from 0.5 to 2.5 weight percent, to supplement the nutrition of the crops, turf, horticulture or silviculture. Aqueous solutions of water soluble salts or complexes of trace metal may be used such as boron, zinc, iron, molybdenum, manganese, magnesium, copper and mixtures thereof to correct any trace metal deficiencies. Suitable water-soluble salts include the sulfate, nitrates and halides of the aforementioned metals. In addition, various chelating agents can be used to insure solubility of these metal nutrients.

Assimilation of the liquid fertilizer compositions of the invention by the foliage can be accelerated somewhat by incorporation of minor amounts, for example from 0.1 to 2.5 preferably from 0.25 to 1.0 weight percent, of a surfactant. Use of the surfactant improves spreading of the liquid compositions on the foliage to achieve an even coverage and also assists in absorption of the fertilizer into the foliage. Suitable surfactants include cationic, anionic and nonionic types as well as mixtures thereof, as are well known in the art.

Various pesticides can also be incorporated with the aforementioned liquid compositions to obtain a combined fertilization-pesticidal treatment. The pesticides may be herbicides having a selective action for undesired vegetation or weed species or can be insecticides, larvicides, or miticides and may be synthetic or naturally occurring chemicals.

The selective herbicides which may be used to control undesired vegetation include: chlorophenoxyalkano acids, esters and salts thereof such as 2,4-dichlorophenoxyacetic acid; 2,4,5-trichlorophenoxyacetic acid; 2-methyl-4-chlorophenoxyacetic acid; 2-methyl-(4-chloro-phenoxy)butyric acid; 4-(2,4-dichlorophenoxy)butyric acid; 2-(2,4,5-trichlorophenoxy) propionic acid; the alkali metal salts of the aforementioned acids or esters of these acids with $C_1$—$C_8$ alkanols or $C_1$—$C_3$ glycols or glycol mono-ethers with $C_1$—$C_5$ alkoxy groups. Examples of these are sodium 2,4-dichlorophenoxy acetate; potassium-2-(2,4-5-trichlorophenoxy)propionate; octyl-2,4-dichlorophenoxyacetate; and mono-butoxyethylene glycol -2,4-dichlorophenoxyacetate; etc.

Other selective herbicides which can be used include $C_1$—$C_5$ alkyl-N-phenyl carbamates and alkyl thiocarbamates such as isopropyl-N-phenyl-carbamate; ethyl-N-chloromates such as isopropyl-N-phenylcarbamate; ethyl-N-chlorophenylcarbamate; 4-chloro-2-butenyl-N-(3-chlorophenyl)carbamate; 2,3-dichloroallyl-N,N-diisopropylthiocarbamate; ethyl-N-N-di-n-propylthiocarbamate; methyl-N-(3,4-dichlorophenyl)-carbamate; n-propyl-N-ethyl-N-(n-butyl)-thiocarbamate; and 2-chloroallyl-N,N-diethyl-dithiocarbamate.

Urea derivatives that exhibit phytotoxicity can also be used and examples include N,N′-substituted ureas having the following substituents: phenyl, chlorophenyl, $C_1$—$C_5$ alkyl, alkoxy and chloroalkyl or chloronorbornyl.

Examples include:
1,3-bis-(2,2,2-trichloro-1-hydroxyethyl)urea,
3-(3,4-dichlorophenyl)-1,1-dimethylurea,
3-phenyl-1,1-dimethylurea,
1-(chloro-e-norbornyl)-3,3-dimethylurea,
3-(3,4-dichlorophenyl)-1-methoxy-1-methylurea,
3-(4-chlorophenyl)-1,1-dimethylurea,
3-(3,4-dichlorophenyl)-1-n-butyl-1-methylurea.
Amides which demonstrate selective phytotoxicity can also be used such as the $C_2$—$C_6$ alkyl,

6

chloroalkyl, phenylalkyl, naphthylalkyl and alkenyl amides having N-phenyl, N-alkyl, N-chlorophenyl and N-alkenyl substituents. Specific examples include: N-(3,4-dichlorophenyl)-methacrylamide; N,N-dimethyl-2,2-diphenylacetamide; 1-naphthylacetamide; N-(3-chloro-4-methylphenyl)-2-methylpentanamide; and N-(3,4-dichlorophenyl)propionamide.

Dichlorobenzoic acid and its amino, $C_1$—$C_3$ alkoxy, nitro and halo derivatives can also be used such as dichloro-benzoic acid; 2,3,6-trichlorobenzoic acid; 3-amino-2,5-dichlorobenzoic acid; 2,6-dichlorobenzonitrile; 2-methoxy-3,6-dichlorobenzoic acid; etc., heterocyclic compounds such as triazine derivatives, e.g., 2-chloro-4,6-bis(ethylamino)-s-triazone and 2-chloro-4-ethylamino-6-isopropylamino-s-triazine.

Various nitrated phenyl compounds known to have selective phytotoxicity can be combined with the fertilizers such as 4,6-dinitro-o-sec-butyl phenol and its alkali metal or alkanol amine salts; 4,6-dinitro-o-cresol and N,N-di(n-propyl)-2,2-6-dinitro-4-methylaniline.

Examples of suitable insecticides include the chlorinated hydrocarbons such as DDT, bis(p-chloro-phenyl) trichloroethane and related compounds, e.g., methoxychlor, Dilan, bis(p-chlorophenoxy) methane, bis(p-chlorophenyl)ethanol, chlorobenzilate, and p-chlorophenyl phenyl sulfone. Other chlorinated hydrocarbons includes benzene hexachloride, Lindane, Chlordane, Aldrin, Dieldrin Heptachlor and Toxaphene.

The organic phosphorus insecticides can also be used including tetraethyl pyrophosphate, tetraethyl dithiopyrophosphate, octamethyl pyrophosphoramide, Parathion, Para-oxon, Methyl Parathion, Chlorothion, o-ethyl-o-p-nitrophenyl benzenethiophosphate, Diazinon, Malathion, and Demeton.

Carbamates such as ferric dimethyldithiocarbamate; trimethylphenyl methylcarbamate; 4-(dimethylamino) m-tolylmethylcarbamate; 4-benzothienyl-N-methylcarbamate; s-ethyl dipropylthiocarbamate; 2,3-quinoxalmedithol cyclic trithiocarbamate; 1-naphthyl-N-methylcarbamate and 2-isopropoxyphenyl N-methylcarbamate.

Various fungicides include: chloranil; 2,3-dichloro-1,4-naphthoquinone, pentachlorophenol; metallic dialkyl dithiocarbamates such as zinc or ferric dimethyldithiocarbamate, disodium ethylene bisdithiocarbamate, manganese ethylene bisdithiocarbamate, captan, colloidal sulfur, lime sulfur, and ammonium polysulfide.

The naturally occurring insecticides can also be used such as the various pyrethums, e.g., pyrethin I, cinerin I, pyrethrin II, cinerin II, jasmolin II, etc., and synthetically prepared and related insecticides such as allethrin, furethrin, cyclethrin, barthrin, and dimethrin, used.

The aforementioned pesticides can be admixed with any of the aforementioned fertilizer solutions in proportions such that the final aqueous material applied will provide from about 0.11 to about 5.6 kg/ha (about 0.1 to about 5 pounds per acre) of the pesticide. A preferred dosage is from 0.56 to 3.4 kg/ha (0.5 to 3 pounds per acre).

The following examples will illustrate a mode of practice of the invention and serve to demonstrate results obtainable thereby.

Example 1

The methods set forth in this Example illustrate the preparation of the urea-formaldehyde reaction product employable in the compositions of the present invention.

A. This method employs solutions of urea and formaldehyde and requires evaporation to achieve the desired nitrogen concentrations.

Into a reactor equipped with an agitator there are charged 28,988 parts of 50% urea solution at a temperature of about 40°C. Then, 9065 parts of a 50% formaldehyde solution and 1196 parts of 29% ammonia solution are added to the reaction mixture. The reaction temperature is maintained below 40°C during these charging operations. The mixture is heated to 90°C and the addition of 25% caustic is started when the temperature reaches 75°C. The caustic is added at a rate to maintain the reaction mixture at pH of 9 to 9.5. Overall addition of 648 parts 25% NaOH solution is completed in about 50 minutes after the reaction mixture reaches a temperature of 75°C. The reaction is continued at 90°C for another 30 minutes for a total of 90 minutes. The reaction mixture is cooled to 40°C and then concentrated in an evaporator at 40 mm Hg absolute pressure and at 37°C, thus producing 22,700 parts of urea-formaldehyde reaction product concentrate, which is then cooled to ambient temperature. For long term storage, an additional 0.5 wt.% ammonia as 29% $NH_4OH$ is admixed with the product. The final product having a salting-out temperature below 0°C. analyzes 31 wt.% total nitrogen and contains about 20% urea N, 15% methylolurea N and 65% methyleneurea N. The urea:formaldehyde ratio was 1.6:1.

B. This method employs solid urea and a urea-formaldehyde concentrate starting material and does not require evaporation.

Into a stirred reaction vessel there are charged 13,000 parts of pebbled urea, 7786 parts of a commercially available urea-formaldehyde concentrate (UFC-85 containing about 25% urea, 60% formaldehyde, and 15% water) and 1200 parts 29% $NH_4OH$, the mol ratio of urea to formaldehyde being 1.6. The mixture is heated and when the temperature reaches 75°C, caustic is added in incremental amounts to maintain the pH between 9 and 9.5 over a reaction period of 60 minutes. A total of 700 parts 25 wt.% NaOH is added during this portion of the reaction period. The reaction is continued at 90°C for an additional 15 minutes and then the solution is permitted to cool to ambient temperature. The final urea-formaldehyde reaction product yield is 22,700 parts and contains 31 wt.% total nitrogen. The product contains 15% urea N, 20% methylolurea N and 65% methyleneurea N. The urea:formaldehyde ratio was 1.6:1.

C. This method employs liquid urea solution and a urea-formaldehyde concentrate starting material.

Into a stirred reactor there are charged 150,103 parts of 50% urea 30 solution, 44,816 parts urea-formaldehyde concentrate (UFC-85 containing 25% urea, 60% formaldehyde and 15% water) and 9273 parts of 29% NH$_4$OH. The temperature during the charge period is held below 40°C. and thereafter heating of the reaction mixture is continued. When the temperature reaches 75°C. incremental addition of caustic is begun to maintain a pH of 9 to 9.5 over a 60 minute reaction period; a total of 4546 parts of a 25 wt.% NaOH solution is used during this portion of the reaction period. The reaction is continued at 90° for an additional 15 minutes. The urea-formaldehyde reaction product is cooled to ambient temperature and then 4580 parts of 29% NH$_4$OH admixed therewith to yield a total of 213,326 parts final product. The final product analyzes 21 wt.% total nitrogen and contains 15% urea N, 15% methylolurea N and 70% methyleneurea N.

Example 2

This experiment demonstrates that water-soluble urea-formaldehyde reaction products employed in the present invention release nitrogen more slowly than urea, but faster than water-insoluble urea-formaldehyde reaction products (ureaform).

0.56 meter square test plots of Bermuda grass were treated with various nitrogenous materials at a rate of about 45 kg/ha (40 pounds per acre). The plot treated with a nutrient solution containing 12% urea nitrogen was dark green and grew vigorously for about 5 weeks. The plot treated with the water-soluble urea-formaldehyde reaction product employable in the present invention was also dark green and grew vigorously for about ten weeks. The plot treated with water-insoluble urea-formaldehyde reaction product (ureaform) was less green and grew more slowly than the other two previously described treated plots, but was greener than the control plot which was untreated with any nitrogenous solution.

Example 3

This Example demonstrates the non-burning character of the urea-formaldehyde water-soluble, urea-formaldehyde reaction products employable in the present invention, relative to urea.

Bahia grass plots in Florida were treated with urea solutions containing 12% and 18% nitrogen, respectively, at rates of about 28, 56 and 85 kg/ha (25, 50 and 75 pounds per acre) of nitrogen. The 12% nitrogen solution burned about 25% of the grass foliage to about 56 kg/ha (50 pounds per acre) of nitrogen and the 18% nitrogen solution burned about 40% of the grass foliage at about 56 kg/ha (50 pounds per acre) of nitrogen. The 12% and the 18% solutions burned more than 50% of the grass foliage at about 84 kg/ha (75 pounds per acre) of nitrogen.

Solutions of the water-soluble urea-formaldehyde reaction product employed in compositions of the invention containing 20% nitrogen were applied to adjacent plots at rates of about 28, 56 and 84 kg/ha (25, 50 and 75 pounds per acre) of nitrogen. No evidence of burning or scorch of the grass foliage in any of the plots was observed.

Example 4

This Example compares the rate of absorbence of nitrogen provided by: (a) urea; (b) typical water-soluble urea-formaldehyde raction product employed in the compositions of the invention (UMM); and (c) water-insoluble urea-formaldehyde reaction product (ureaform).

Soybeans at mid-pod stage and corn were sprayed with a liquid nutrient composition mixture having an N-P-K grade corresponding to 12—6—6 in which the nitrogen was provided by urea, UMM and ureaform, as indicated above. The amount of nitrogen absorbed, following ten (10) days of application of the liquid nutrient compositions, is set forth in Table I below.

8

TABLE I

| Nitrogen Containing Component Applied | Nitrogen Absorbed (%) | |
| --- | --- | --- |
| | Soybeans | Corn |
| Control | 4.14 | 3.01 |
| Urea | 4.64 | 3.39 |
| UMM | 4.49 | 3.25 |
| Ureaform | 4.23 | 3.13 |

**Claims**

1. A nonphytotoxic aqueous composition for use as a foliar fertilizer to provide essentially uniform absorption of nitrogen, phosphorus and potassium and, if present, sulfur macronutrient components thereof by the plant growth to which it is applied, comprising an aqueous solution containing urea, polyphosphate, potassium and optionally sulfur as primary nutrient constituents, characterized by containing, on a weight basis,
a) 3% to 35% nitrogen, present in the form of a water-soluble urea-formaldehyde reaction product in which the nitrogen is provided 5 to 50% by unreacted urea, 5 to 25% by methylolurea compounds and 30 to 80% by methyleneurea compounds, which is substantially free of unreacted formaldehyde and which has an ammoniacal nitrogen content of not more than 5%;
b) 3% to 30% phosphorus (calculated as $P_2O_5$) having at least 35% of the phosphorus present in the polyphosphate form;
c) 3% to 30% of potassium (calculated as $K_2O$); and
d) from 0 to 5% sulfur in the form of a water-soluble salt.
2. A composition according to claim 1 which also contains in minor amounts at least one trace metal nutrient in the form of a water-soluble salt or complex of boron, zinc, iron, molybdenum, manganese, magnesium or copper.
3. A composition according to claim 1 or 2 characterized by having a chloride ion content of less than 2%.
4. A composition according to claim 1, 2 or 3 wherein said urea-formaldehyde reaction product is in the form of an aqueous solution containing 80% to 90% by weight, of a product obtained by reacting urea and formaldehyde in a mole ratio above 1:1 and less than 2:1.
5. A composition according to any one of claims 1 to 4 wherein the urea-formaldehyde reaction product is a stable aqueous urea-formaldehyde concentrate solution of pH between 7 and 11 and is the product of reaction obtained by preparing an aqueous mixture of urea and formaldehyde in a molar ratio above 1:1 but less than 2:1, adding ammonia in an amount of 0.3% to 6%, by weight, of the urea and formaldehyde, heating the resultant reaction mixture at a temperature between 75°C. and the boiling temperature while maintaining the pH of said mixture between 8.5 and 10 by the addition of strong alkali until at least 90% of the formaldehyde is in combined form, with at least 60% in the form of methylol compounds and then discontinuing the addition of alkali and continuing said heating until at least 50% but no more than 80% of the formaldehyde is in the form of methylene groups.
6. A composition according to claim 5 wherein the urea-formaldehyde concentrate solution is further characterised by having a water content of no more than 20%, by weight of the concentrate.
7. A composition according to claim 5 or 6 wherein the urea-formaldehyde concentrate is obtained by employing a nonresinous reaction product of urea-formaldehyde containing about 25% urea, about 60% formaldehyde, and about 15% water and wherein the amounts of the primary nutrient constituents are 10% to 20% nitrogen; 3% to 20% phosphorus and 3% to 15% potassium.
8. A composition according to claim 7 additionally containing between 1% and 3% sulfur.
9. A composition according to any one of the preceding claims which contains a surfactant and/or a pesticide.
10. A process for improving the yield of plants which comprises applying to the foliage of the plants without effecting substantially any drainage to the surface soil a composition as claimed in any one of the preceding claims which has been diluted with sufficient water to achieve complete distribution of the composition.

**Patentansprüche**

1. Nicht-phytotoyisches wäßriges Mittel zur Verwendung als ein Blattdüngemittel zur im wesentlichen gleichmäßigen Absorption von Stickstoff-, Phosphor- und Kalium- und gegebenenfalls Schwefel-

9

**0 013 307**

Makronährstoffkomponenten hiervon durch die wachsende Pflanze, der es verabreicht wird, bestehend aus einer wäßrigen Lösung, die Harnstoff, ein Polyphosphat, Kalium und gegebenenfalls Schwefel als primäre Nährstoffbestandteile enthält, dadurch gekennzeichnet, daß es, auf Gewichtsbasis,

a) 3 bis 35% Stickstoff in der Form eines wasserlöslichen Harnstoff-Formaldehyd-Reaktionsproduktes, in welchem der Stickstoff zu 5 bis 50% durch unumgesetzten Harnstoff, zu 5 bis 25% durch Methylharnstoffverbindungen und zu 30 bis 80% durch Methylen-harnstoffverbindungen geliefert wird, das im wesentlichen frei von unumgesetztem Formaldehyd ist und das einen Ammoniakstickstoffgehalt von nicht mehr als 5% besitzt,

b) 3 bis 30% Phosphor (berechnet als $P_2O_5$) mit wenigstens 35% in der Polyphosphatform vorliegendem Phosphor,

c) 3 bis 30% Kalium (berechnet also $K_2O$) und

d) 0 bis 5% Schwefelt in der Form eines wasserlöslichen Salzes enthält.

2. Mittel nach Anspruch 1, das auch in kleineren Mengen wenigstens einen Spurenmetallnährstoff in der Form eines wasserlöslichen Salzes oder Komplexes von Bor, Zink, Eisen, Molybdän, Mangan, Magnesium oder Kupfer enthält.

3. Mittel nach Anspruch 1 oder 2, dadurch gekennzeichnet, daß es einen Chloridionengehalt von weniger als 2% besitzt.

4. Mittel nach Anspruch 1, 2 oder 3, worin das Harnstoff-Formaldehyd-Reaktionsprodukt in der Form einer wäßrigen Lösung vorliegt, die 80 bis 90 Gewichtsprozent eines Produktes enthält, das durch Umsetzung von Harnstoff und Formaldehyd in einem Molverhältnis oberhalb 1:1 und geringer als 2:1 erhalten wurde.

5. Mittel nach einem der Ansprüche 1 bis 4, worin das Harnstoff-Formaldehyd-Reaktionsprodukt eine stabile wäßrige Harnstoff-Formaldehyd-Konzentratlösung mit einem ph-Wert zwischen 7 und 11 und das Reaktionsprodukt ist, das man durch Herstellung eines wäßrigen Gemisches von Harnstoff und Formaldehyd in einem Molverhältnis oberhalb 1:1 doch geringer als 2:1, Zugabe von Ammoniak in einer Menge von 0,3 bis 6 Gewichtsprozent des Harnstoffs und Formaldehyds, Erhitzen des resultierenden Reaktionsgemisches auf eine Temperatur zwischen 75°C und der Siedetemperatur, während der pH-Wert dieses Gemisches durch Zugabe von starkem Alkali, bis wenigstens 90% des Formaldehyds in gebundener Form mit wenigstens 60% in der Form von Methylolverbindungen vorliegen, zwischen 8,5 und 10 gehalten wird, und anschließende Unterbrechung der Alkalizugabe und Fortsetzen des Erhitzens, bis wenigstens 50%, aber nicht mehr als 80% des Formaldehyds in der Form von Methylengruppen vorliegen, erhalten wurde.

6. Mittel nach Anspruch 5, worin die Harnstoff-Formaldehyd-Konzentratlösung weiterhin dadurch gekennzeichnet ist, daß sie einen Wassergehalt von nicht mehr als 20 Gewichtsprozent des Konzentrates hat.

7. Mittel nach Anspruch 5 oder 6, worin das Harnstoff-Formaldehyd-Konzentrat durch Verwendung eines nichtharzartigen Reaktionsproduktes von Harnstoff-Formaldehyd mit einem Gehalt von etwa 25% Harnstoff, etwa 60% Formaldehyd und etwa 15% Wasser, worin die Mengen der primären Nährstoffbestandteile 10% bis 20% Stickstoff, 3% bis 20% Phosphor und 3% bis 15% Kalium sind, erhalten wurde.

8. Mittel nach Anspruch 7, das zusätzlich zwischen 1% und 3% Schwerfel enthält.

9. Mittel nach einem der vorausgehenden Ansprüche, das ein oberflächenaktives Mittel und/oder ein Pestizid enthält.

10. Verfahren zur Verbesserung des Ertrages von Pflanzen, indem man auf das Laub der Pflanze ohne wesentliches Ablaufen auf die Bodenoberfläche ein Mittel gemäß einem der vorausgehenden Ansprüche aufbringt, das mit genügend Wasser verdünnt wurde, um eine vollständige Verteilung des Mittels zu erreichen.

**Revendications**

1. Composition aqueuse non phytotoxique pour l'utilisation comme engrais foliaire pour fournir une absorption essentiellement uniforme de composants macronutritifs azotés, phosphorés et potassiques et, s'ils sont présents, soufrés par la croissance de la plante à laquelle elle est appliquée, comprenant une solution aqueuse contenant de l'urée un polyphosphate, du potassium, et de manière facultative du soufre comme constituants nutritifs principaux, caractérisée en ce qu'elle contient sur une base en poids.

a) 3 % à 35 % d'azote, présents sous la forme d'un produit réactionnel urée-formaldéhyde soluble dans l'eau, dans lequel l'azote est fourni en quantité de 5 à 50 % par de l'urée n'ayant pas réagi, en quantité de 5 à 25 % par des composés de méthylolurée et en quantité de 30 à 80 % par des composés de méthylèneurée, qui est sensiblement exempt de formaldéhyde n'ayant pas réagi, et qui a une teneur en azote ammoniacal non supérieure à 5 %;

b) 3 % à 30 % de phosphore (calculés sous forme de $P_2O_5$) ayant au moins 35 % du phosphore présents sous la forme de polyphosphate;

c) 3 % à 30 % de potassium (calculés sous forme de $K_2O$); et

d) 0 à 5 % de soufre sous la forme d'un sel soluble dans l'eau.

10

2. Composition selon la revendication 1, qui contient également, en quantités peu importantes, au moins un produit nutritif métallique à l'état de trace sous la forme d'un sel ou d'un complexe, soluble dans l'eau, de bore, de zinc, de fer, de molybdène, de manganèse, de magnésium ou de cuivre.

3. Composition selon la revendication 1 ou 2, caractérisée en ce qu'elle a une teneur en ion chlorure de moins de 2 %.

4. Composition selon la revendication 1, 2 ou 3, dans laquelle le produit réactionnel urée-formaldéhyde est sous la forme d'une solution aqueuse contenant 80 % à 90 %, en poids, d'un produit obtenu en faisant réagir de l'urée et du formaldéhyde suivant un rapport molaire supérieur à 1:1 et inférieur à 2:1.

5. Composition selon l'une quelconque des revendications 1 à 4, dans laquelle le produit réactionnel urée-formaldéhyde est une solution de concentré aqueux stable d'urée-formaldéhyde, à pH compris entre 7 et 11 et est le produit de la réaction obtenu en préparant un mélange aqueux d'urée et de formaldéhyde suivant un rapport molaire supérieur à 1:1 mais inférieur à 2:1, en ajoutant de l'ammoniac en quantité de 0,3 % à 6%, en poids, par rapport à l'urée et au formaldéhyde, en chauffant le mélange réactionnel résultant à une température comprise entre 75°C et la température d'ébullition tout en maintenant le pH du mélange entre 8,5 et 10 par l'addition d'alcali fort jusqu'à ce qu'au moins 90 % du formaldéhyde soient sous forme non combinée, au moins 60 % étant sous la forme de composés de méthylol, et puis en interrompant l'addition d'alcali et en poursuivant le chauffage jusqu'à ce qu'au moins 50 % mais pas plus de 80 % du formaldéhyde soient sous la forme du groupes méthylènes.

6. Composition selon la revendication 5, dans laquelle la solution de concentré d'urée-formaldéhyde est en outre caractérisée en ce qu'elle a une teneur en eau non supérieure à 20 % en poids par rapport au concentré.

7. Composition selon la revendication 5 ou 6, dans laquelle le concentré d'urée-formaldéhyde est obtenu en employant un produit réactionnel non résineux d'urée-formaldéhyde contenant environ 25 % d'urée, environ 60 % de formaldéhyde, et environ 15 % d'eau et dans laquelle les quantités des constituants nutritifs principaux sont 10 à 20 % d'azote, 3 % à 20 % de phosphore et 3 % à 15 % de potassium.

8. Composition selon la revendication 7, contenant en outre entre 1% et 3 % de soufre.

9. Composition selon l'une quelconque des revendications précédentes, qui contient un produit tensioactif et/ou un pesticide.

10. Procédé pour améliorer le rendement de plantes qui consiste à appliquer au feuillage des plantes, sans effectuer sensiblement de drainage jusqu'à la surface du sol, une composition comme revendiquée dans l'une quelconque des revendications précédentes, qui a été diluée avec suffisamment d'eau pour obtenir une distribution complète de la composition.